# EUROPEAN PATENT APPLICATION

(11) **EP 3 082 061 A1**
(43) Date of publication of application: **19.10.2016**
(21) Application number: 16165187.2
(22) Date of filing: 13.04.2016
(51) Int. Cl.: G06K 7/10

(54) **COMMUNICATIONS SYSTEM FOR AIRCRAFT**

(30) Priority: 13.04.2015 NZ 70693515
(71) Applicant: Phitek Systems Limited, Auckland 1023 (NZ); Greig, Nigel, 1022 Auckland (NZ); Dublon, Michael Alexis Hamish, 7010 Nelson (NZ)
(72) Inventor: The designation of the inventor has not yet been filed
(74) Representative: Richardson, Mark Jonathan

(57) **Abstract**

A method for communicating between a near field device (3) and a near field reader (2), the method comprising the steps of: detecting the presence of the near field device (3) by a proximity detector (5); and activating the field (4) of the near field card reader (2); wherein the detection of the near field device (3) allows the time period of activation of the near field card reader (2) to be reduced.

## Description

### Field of the Invention

The present invention relates to an apparatus and/or method for contactless card transactions, for instance using NFC communications.

### Background

The use of contactless cards using RFID and near field communications (NFC) technology is becoming ubiquitous for customer transactions. The cards typically operate according to standards such as ISO14443 and EMVCO. The standards set a series of requirements for the design of apparatus to be used in conjunction with the contactless card systems. The contactless cards interface with a reader which creates a field that is able to energise the contactless card. The contactless card may be referred to as a proximity integrated circuit card (PICC) and the reader may be referred to as a proximity coupling device (PCD). In some cases an NFC system may be implemented on a device which is not a card, such as a mobile device. In some cases multiple card readers (PCD) can be used in an installation. NFC allows communications over a short-range where a reader and a card, or a mixture of transceivers, are brought into proximity. The invention is broadly applicable to any suitable near field device and near field reader; however it will be described herein with reference to a near field device implemented as a contactless card and an associable reading device. The near-field device on a card may have a microprocessor and an antennae and will preferably be able to power itself from the field generated by the reader.

One of the requirements of the EMVCO standard is a minimum operating volume. A card must be able to be successfully read if placed anywhere within this operating volume. This determines the distance at which a card can be away from the reader and achieve a successful transaction. A second requirement of the EMCVO system is a maximum time to complete a transaction; this is in the order of 500ms. The standard provides an expectation that any user of a contactless card reader always receives a consistent user experience. It is important to ensure that the data from the cards is read consistently when in the field.

US7520435 describes a contactless payment card reader for an RFID contactless card. The reader creates an operating volume to meet the ISO 14443 standard. The operating volume is frusto-conical in shape. A typical volume comprises a cylindrical portion between two frusto-cone potions to form a cylinder which narrows at either end. In a typical operation of the reader the reader would energise the field in the frusto-conical area when a signal was received from a controller. The field would then remain energized for a period of time, for instance from 20 seconds to 1 minute or more. Within this period of time a card that was brought into the operating volume would be energised by the field and a transaction between the card and the reader could occur. The contactless cards typically communicate using a 13.56MHz carrier wave.

All electronic devices integrated on an airframe for use on an aeroplane must meet strict requirements for compliance with electromagnetic compatibility. This is targeted to reduce the possibility that there is any untoward interference between the installed device and the operation of the aeroplane and/or any of the aeroplanes communications or other electrical systems. In the case of commercial aviation the RTCA standard DO-160 applies. This has defined limits for emissions and immunity that must be adhered to gain approval for integration onto a plane. Of particular interest are radiated emissions from any electronic device. Other airframe manufacturers such as Boeing also have radiated emissions standards such as D6-36440 that must be adhered to. The D6-36440 standard has several distinct notches, requiring low electromagnetic emissions for example in the region between 2 and 30 MHz.

### Objects of the Invention

It is an object of the invention to provide a near field device apparatus and/or method which reduces electromagnetic emissions. It is a further object to reduce RF emissions in the implementation of near field device technology.

Alternatively the apparatus and/or method will at least go some way to overcoming disadvantages of existing systems, or which will at least provide a useful alternative to existing systems.

Further objects of the invention will become apparent from the following description.

### Summary of Invention

Accordingly in one aspect the invention may broadly be said to consist in a method for communicating between a near field device and a near field reader, the method comprising the steps of:
Detecting the presence of the near field device by a proximity detector;
Activating the field of the near field card reader.

In an embodiment the near-field device is a card, mobile device or electronic device. The device may be powered by the reader field or have a separate power source. The near field device may be a transceiver or have a function limited to transmitting information contained on the card.

In an embodiment the near field device is an integrated circuit card (ICC) such as a PICC.

In an embodiment the method comprises the step of deactivating the field of the near field reader when the communication is complete or if the card is removed from the field.

In an embodiment the method comprises the step of determining the distance between the near field reader and the near field device.

In an embodiment the method comprises the step of receiving an activation signal.

In an embodiment the activation signal is transmitted by a control means.

In an embodiment the control means is a portion of an IFE system.

In an embodiment the activation signal indicates that a user has selected a transaction to take place.

In an embodiment the method comprises the step of adjusting the field or field strength of the contactless card reader dependent on the distance and/or orientation and/or misalignment between the near field readers and the near field device.

In an embodiment the method comprises the step of ascertaining if an additional near field reader is in operation in proximity to the near field reader.

In a further aspect the invention may broadly be said to consist in a near field reader comprising:
A communication means for communications between the reader and a near field device; and
A proximity detector for detecting a near field device when in proximity to the reader,
Wherein when the proximity detector detects a near field device the communication means is activated.

In an embodiment the proximity detector detects the distance of the near field device from the reader wherein the power level of the communications means is adjusted dependent on the distance.

In an embodiment the communication means is not activated until the distance is within a suitable maximum distance from the reader.

In an embodiment the proximity detector is an optical detector such as a visible light, or infrared.

In an embodiment the proximity detector is an ultrasound detector.

In an embodiment the proximity detector is a RF detector.

In an embodiment the proximity detector measures capacitance or dielectric field.

In an embodiment the sensing range of the proximity detector is adjustable.

In an embodiment the adjustment is made in software.

In an embodiment the proximity detector detects the removal of the near field device from the reader and deactivates the communication means.

In an embodiment the communication means is deactivated when the communication is complete or a set period of time expires.

In an embodiment the near field reader is connected or connectable to an airframe.

In an embodiment the near field reader is connected or connectable to an aircraft seat.

In a further aspect the invention may broadly be said to consist in a system for near field device reading on an aeroplane, the system comprising a plurality of near field readers as described in any one or more of the other aspects.

In an embodiment the plurality of near field readers are arranged in one or more groups.

In an embodiment a control means is associated with at least one of the one or more groups, wherein in use the control means controls the operation of the remaining near field readers when at least one near field reader is in use.

In an embodiment the control means prevents a near field reader from activating when another near field reader is activated or in use.

In an embodiment the control means limits the activation energy of a near field reader.

In a further aspect the invention may broadly be said to consist in a near field reader comprising a communication means for communicating with a near field device,
Wherein the communication means uses spread spectrum technology.

In an embodiment the spread spectrum technology comprises static or dynamic variation of the frequency of the carrier wave wherein the peak frequency emission is reduced.

In an embodiment the spread spectrum technology emits a broader range of wavelengths having a lower peak emission frequency.

In a further aspect the invention may broadly be said to consist in a plurality of near field readers arranged in one or more groups,
Wherein a control means associated with the one or more groups limits the activity of the near field readers when one of the near field readers is in use.

In an embodiment the control means prevents a near field reader from activating when another near field reader is activated or in use.

In an embodiment the near field readers comprise a part of an In-flight entertainment system.

In a further aspect the invention may broadly be said to consist in a near field reader having a plurality of states comprising:
a) A state in which the reader is not transmitting;
b) A state in which the presence of a near-field device can be detected;
c) A state in which a near field transaction between the reader and the device can occur; and
Wherein a control signal moves the reader from state a) to state b) and the presence of a near-field device moves the reader from state b) to state c).

In a further aspect the invention may broadly be said to consist in a near field reader in which the time in which a field is produced for reading a near field device is reduced.

The disclosed subject matter also provides a near field reader or method of reading a near field card which may broadly be said to consist in the parts, elements and features referred to or indicated in this specification, individually or collectively, in any or all combinations of two or more of those parts, elements or features. Where specific integers are mentioned in this specification which have known equivalents in the art to which the invention relates, such known equivalents are deemed to be incorporated in the specification.

Further aspects of the invention, which should be considered in all its novel aspects, will become apparent from the following description.

### Drawing Description

A number of embodiments of the invention will now be described by way of example with reference to the drawings in which:
**Figure 1** is a schematic of a first embodiment of a near field reader system according to the invention.
**Figure 2** is a flowchart of an embodiment of a method of operating a near field device system according to the invention.
**Figure 3** is a schematic of an embodiment of a near field reader system operating at different distances according to the invention.
**Figure 4** is a schematic of a second embodiment of a near field reader system according to the invention.
**Figure 5** is diagram of the spread spectrum approach in an embodiment of the invention, the effect has been exaggerated.
**Figure 6a, b and c** are diagrams of possible shielding methods for the system.

### Detailed Description of the Drawings

Throughout the description like reference numerals will be used to refer to like features in different embodiments.

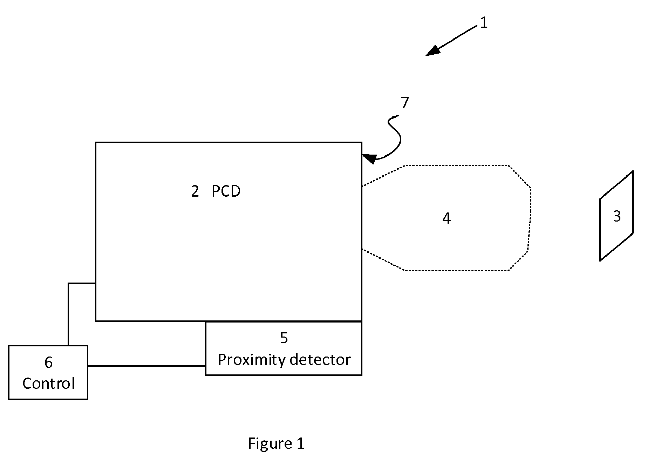

Figure 1 is a schematic diagram of an embodiment of a near field device system 1 including a near field reader 2, near field device 3 or card, reader operating volume 4 and proximity detector 5. The card reader 2 produces a field in the operating volume 4 when it is activated. The reader operating volume may represent a spatial area in which the field exceeds, or can exceed, a certain threshold. The operating volume 4 may be a fixed shape or may have shielding or shaping present to limit the extent of the field. Card reader standards determine the required minimum size of the operating volume. Producing a field of the required size may create a large amount of emissions at the frequency of operation. Radio frequency (RF) near field communication (NFC) uses a carrier frequency of 13.56 MHz; other systems may use a similar frequency. Although this specification may focus on NFC devices the ideas may be generalised to include similar contactless payment systems using similar RFID or other technologies. Similarly many NFC chips are placed in integrated circuit type cards, however suitable near field devices also include consumer style near field capable items including mobile devices, mobile phones, tablets or key fobs etc. with communication ability.

In use a passenger may make a selection of a purchase through the inflight entertainment (IFE) system. The control means 6 will then activate the field generator or reader 2. The control means is typically a microcontroller but may alternatively be a logic device or FPGA or computer or inflight entertainment system, or other device capable of controlling the reader. In some embodiments the control means may be connected with the reader although preferably the control means 6 is a portion of the IFE or aeroplane systems, for instance as a part of the seat electronics box (SEB) or IFE control centre. The reader 2 is preferably mounted to the airframe, preferably in the seat or armrest, or in the seat in front of the user. This allows easy access to the unit. In an embodiment of the invention the reader is dormant or non-transmitting until activated by the control signal. The activation may be by a signal, preferably electronic, from the control means to the detector. The activation signal causes the reader to begin detecting the presence of a near field device/ contactless card, although preferably not at the operational frequency. An advantage of the activation signal is that the NFC unit is not broadcasting unless a user has indicated a purchase will occur.

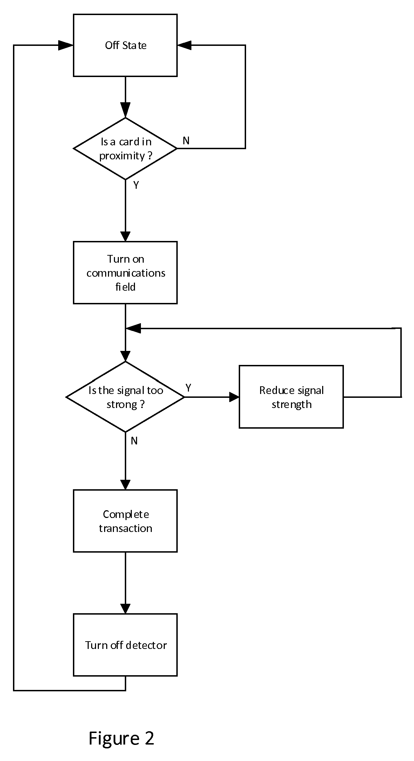

Fig 2 shows a flowchart for an embodiment of the operation of the system 1. When the reader 2 is activated the field 4 is in an off state. The proximity detector 5 is then activated to identify when a card is in proximity to the reader, preferably near the face 7 of the card reader. The proximity detector may be any known detector such as an optical detector, infrared or ultrasonic detector. Alternatively an electrical detector may be used. For instance this may detect a change in the capacitance or dielectric constant in proximity to the face 7 of the detector. In a further alternative there may be multiple proximity detectors 5 to better establish the location or alignment of the card 3. There may be a control system in the detector to discern between a card and another object in front of the detector. In some cases the proximity detector could use the operational frequency of the reader 2, however this should be avoided to reduce the emission at an unwanted frequency. In an embodiment an alternative frequency could be used for the proximity detector which avoids the emission notches. If the proximity detector senses a card 3 in the region of the reader 2 the reader may be turned on. The communication between the card 3 and reader 2 can then be completed, including a transaction or payment if required.

When the communication has ended the field 4 can be switched off. Alternatively the field is also switched off when the proximity detector 5 indicates that the card 3 is no longer present in a spatial region or the operating volume or if a set time period has elapsed. This allows an incorrect transaction to be cancelled and restarted without requiring the field to remain on. In this embodiment the device has three states: an off state in which the reader 2 is asleep or not transmitting; a searching or identifying mode where the reader 2 is waiting for an indication that an near field device 3 has been introduced to the vicinity; and an operational state or field on state in which the reader 2 field is turned on and a transaction may be processed. If the time of the operational state is reduced then the possibility of multiple cards being operated at one time is reduced, or the system can be controlled to avoid multiple NFC transactions.

In this method the length of time the reader must be in the 'on' state is reduced. This is because the reader does not produce a field in the operating volume 4 for the whole time from when the control instructs it to turn on until the end of the transaction. Instead no field is produced until the card is in a position to be read. This may reduce the field time from 1 minute or more to 500ms or substantially the length of the transaction. In this way the length of operational time for the reader is reduced, and therefore also the radiated emissions from the system. Other possible ways of reducing the operational time are by flashing lights or changing the generated field based on timing of a typical swipe. However these are user dependent (e.g. length of time to get card to lights, estimation of the time from accepting the transaction to completing the transaction) and are thus unlikely to narrow the time window in a broad range of situations or narrow the window in a predictable way. For instance if the device estimated a typical swipe time or speed this may allow it to reduce/increase the field automatically after a card was detected and until the transaction was complete. However this would require that the swiping or transaction was similar between most users.

In a preferred embodiment the field is further reduced by the proximity detector 5 having a measurement means. The measurement means is able to calculate the distance of the card from the reader and modify or adjust the field as required. For instance if the card is in contact with the reader the field does not need to extend 40mm away from the face 7 of the reader 2. The proximity detector 5 may send a distance measurement to the reader 2 or control unit 6 and the field, or a characteristic of the field, may be adjusted up or down, adjusting the extent of the field or maximum field strength depending on the distance. A margin of error may be included to ensure that some movement of the card is allowed without losing the communication signal. In an embodiment the margin of error may be predicted based on operation of the card - e.g. an approaching card or an accelerating card may have a smaller margin of error. In further embodiments the shape of the operating volume is altered to target the card location more directly. In a further embodiment multiple detectors are used to produce a more detailed card location or orientation estimate. The sensing range or detection range and the relationship between the detection range and the field or power may be set in software and adjusted depending on the environment or usage in a particular aeroplane.

The proximity detector should detect when the card is very close but very misaligned with the reader. Thus, the proximity detector may detect both distance and alignment. The magnetic coupling factor between the antenna in the card and the antenna in the reader can give a good indication of the likelihood of successful communication. The coupling factor would decrease with both further distance and more misalignment. Thus detection of the coupling factor as a control of the field strength can also be included. The proximity detector may be adjusted to detect, or remove from detection, unwanted objects. For instance a very low power signal may be used to distinguish between 'dead objects' such as clothing an a card 3. In other embodiments the reader is only activated when instructed by the user. Failure of communications may also be used to indicate presence of an object.

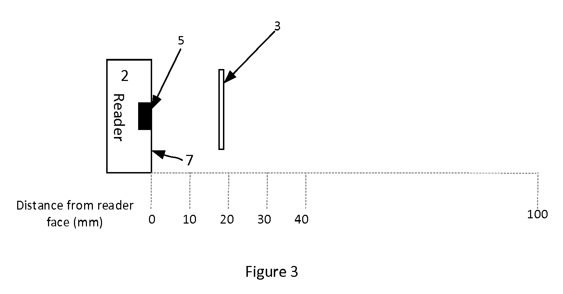

Figure 3 shows an embodiment of the detector 2 where the card 3 is shown at a distance of approximately 18mm from the face 7 of the detector. The proximity detector 5 or sensor is located in the centre of the face 7, although this may be adjusted as required to fit the dimensions or other electronics present in the reader 2. As the passenger brings the card from the far field (e.g. 100mm away) towards the reader the radiated emission from the reader can be reduced. This is because the transmission distance to the RFID chip in the card 3 is reduced and therefore the antennae power may also be reduced. In this way the overall emission from the reader 2 can be reduced. Further reduction is possible if the reader 2 limits the maximum emission radiated, or power level or distance at which a card 3 will be read. In a further embodiment the power level or coupling between the reader and device may be measured to ascertain how much power is required to continue a transmission. An automated program may be used to determine the assumed movement of a card, or to track the current movement and apply a model of expected future position and/or movement allowing the power to be reduced. That is to say the apparatus can see that the card is coming closer, and delay activation of the field until the card is actually closer (or change the power level of the field), thus communications can be at lower field strength, limiting unwanted emissions. In a further embodiment the card type may be detected, by a detector or by the coupling to the card. It may be possible to read new cards using lower magnetic field strengths, further reducing RF emissions.

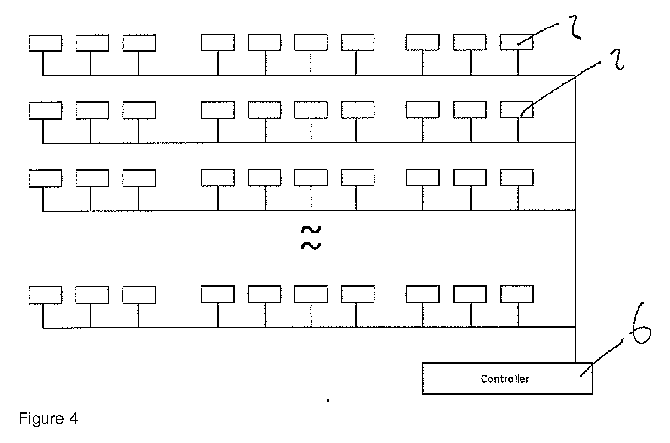

Figure 4 shows an embodiment of the invention where a plurality of readers 2 are in an aeroplane or aircraft or other passenger vehicle. The readers may form a single group or a plurality of groups. In a particular example the readers may be grouped by row number or connection to a seat electronics box. A control unit 6 is shown as controlling a plurality of readers 2. The control means 6 is able to establish which readers 2 are in use and which have been requested use. The control means 6 limits the operation of multiple readers at one time. In one embodiment this may restrict operation to a single reader 2 in each group, or a single reader on the plane. In another embodiment multiple readers may be allowed in each group but the power level may be reduced. In this way the system can ensure that the overall emission in a spatial area of the aeroplane, or the aeroplane as a whole, does not exceed the standards or is otherwise limited to a minimum level or length of time.

In a preferred embodiment the system of Figure 4 is combined with the method shown in Figure 2 which limits the operational time of the reader. In this case the reader may be in operation for 500ms or less. This operation time should result in limited delay if multiple users in the aeroplane request NFC usage concurrently. A typical usage may be that the control unit 6 receives an instruction that a user wishes to make an NFC payment. The control unit 6 then checks if any other units are using readers. If a reader is in use and is too close to the requesting NFC payment the control unit delays the NFC transaction until the in use payment has been completed. In the preferred embodiment where this delay is short the delay should not be noticeable to the user. The status of the near-field reader may be identified by flashing lights or other visual or aural means.

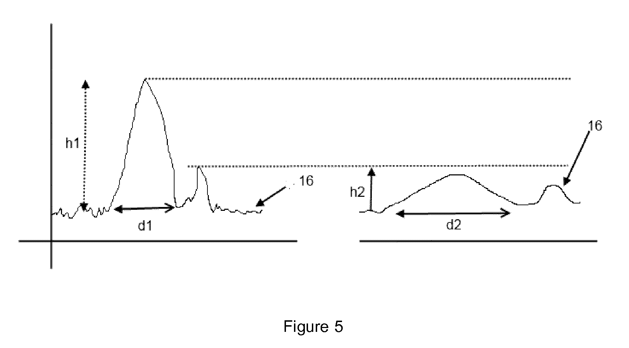

Figure 5 shows an alternative embodiment, which may be used in conjunction with the earlier embodiments, in which the frequency of the reader 6 is changed using spread spectrum technology. Spread spectrum technology attempts to reduce the peak radiation by emitting at a small range of frequencies surrounding the normal peak frequency. In this case the overall emissions are typically higher, but this is now spread across a larger bandwidth, so that the peak emission reduces. Figure 5 shows the peak emission height h1 reduced to h2 while the frequency spread d1 increase to d2. This effect is exaggerated for clarity in this example. In an embodiment the frequency of the carrier wave 16 is varied dynamically by a small amount. The frequency of operation may also be changed, this may allow the notches to be avoided but suitable transmission between the device and reader to be achieved. While spread spectrum is typically used for high security data (because it is difficult to jam or detect) here it can reduce the overall emission to comply with regulations or requirements.

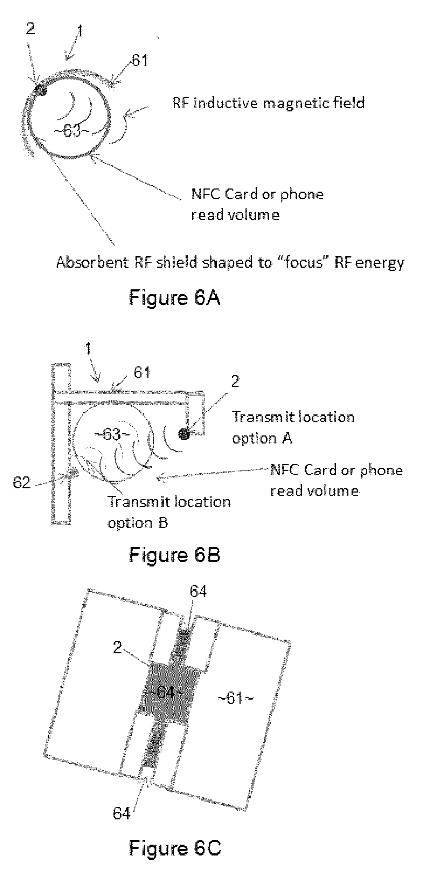

Figure 6a, b and c demonstrate methods for shielding or shaping the environment or surroundings of the transmitter or transmitters to reduce the emission of a transaction. This is useful when, for instance, there is a particular direction of concern, or a line of sight measurement location. Figure 6a shows a first embodiment where the near field system 1 has a detector or transceiver 2 receiver located in a first position. A shield 61 is used to reduce or ameliorate transmission, or RF energy, in a chosen direction. The shield absorbs the transmission in the other directions. In some cases the shield may also be reflective, or act to focus the field at a distance from the transceiver or reader 2. A number of RF shielding materials are available, including shaped materials or high dielectric materials. This may help to increase the field at a distance from the transmitter 2 while limiting the transmission beyond this point, for example into a wider aircraft environment.

Figure 6b also shows a near field system 1 having a shield 61. In this case the shield extends away from the transmitter or transceiver 2 to create an internal area 63 partially enclosing operating volume 4. This structure enables the transmission to be shielded on multiple sides limiting the emissions outside the internal area 63. The near field device 1 may have a plurality of transmitters 2, 61. The transmitters 2, 61 may be used separately (to create separate fields) or in combination (to create a single field through interference. Fig. 6b demonstrates how transmitter 2 could be used when a near field card or device 3 is first brought near the system 1. As the device 3 enters the operating volume 4 it begins to move further form transceiver 2 and closer to transceiver 62. Therefore each transmitter can have a reduced power and the system 1 can change between transceivers depending on the distance or signal, obtained from each transceiver. In other embodiments further transceivers may be used to further reduce the distance each transceiver must communicate over. The multiple transceivers may also be used with different shielding arrangements, or without shielding arrangements. For instance the system of Fig 6A could include transceivers at, or near the distal ends of the shield 61. These transceivers could face inwards, substantially towards transceiver 2.

Figure 6c shows a system in which the transceiver 2 has a shield 61 which overlaps or covers a portion of the transceiver. In this embodiment the field can be directed so as to extend in a desired direction. In some instances this may allow a higher power transceiver 2 to be used, so long as the emissions are contained, in part, behind the shield 61. In embodiments of the invention a user may be encouraged to place the near field device near to, or within the shield 61. For instance the shield may have a gap 64 in which a card or device can be inserted or partially inserted.

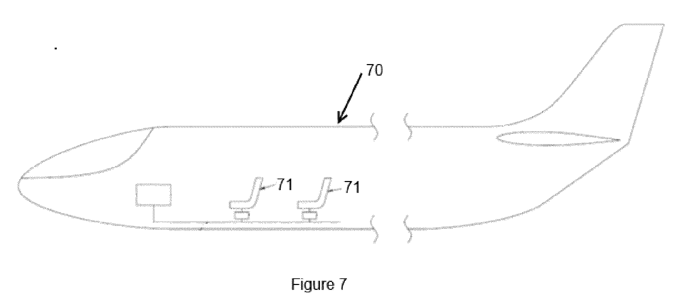

Figure 7 shows embodiments of the invention in which the near field system 1 is located in a passenger vehicle such as an airplane 70. A plurality of near field systems may be located in the airplane 70, as discussed with reference to Fig. 4. The near field systems are preferably associated with a passenger location 71 such as a seat. The transceivers 2 may be attached to, connectable with or otherwise associated with a passenger location 71, the seat, a armrest or an adjacent or nearby seat or part of the plane. In particular embodiments the shielding, as discussed with reference to Figures 6 may be a part, or be inserted in, an element of the plane such as a seat or a removable jack point. For instance the concave structure of Fig. 6A may be located on a seat back, or behind the tray table, or other moveable element associated with a passenger seat. In further embodiments known elements, or moveable elements are used to create the internal area 63 shown in Figure 6b. For instance the recess or hollow for the tray table, an armrest or visual display unit, may be used to contain the field at the passenger seat. The element of the plane may be chosen so as to create a particular angle for the transmitter, or to create an overhang as in Figure 6B. In a further embodiment the system 1 may be packaged as an insert which may be inserted into a suitable opening associated with a passenger location. The insert may comprise a shaped element to provide the shielding, or shaping described herein.

The particular shape of the area 63 may be varied depending on the location of the near field device. In embodiments of the system the near filed device 1 may be located in or around an aircraft seat or aircraft passenger location 70, as shown in Figure 7.

From the foregoing it will be seen that a method and/or apparatus for contactless card reading is provided which reduces the radiated emissions.

Unless the context clearly requires otherwise, throughout the description, the words "comprise", "comprising", and the like, are to be construed in an inclusive sense as opposed to an exclusive or exhaustive sense, that is to say, in the sense of "including, but not limited to".

Although this invention has been described by way of example and with reference to possible embodiments thereof, it is to be understood that modifications or improvements may be made thereto without departing from the scope of the invention. The invention may also be said broadly to consist in the parts, elements and features referred to or indicated in the specification of the application, individually or collectively, in any or all combinations of two or more of said parts, elements or features. Furthermore, where reference has been made to specific components or integers of the invention having known equivalents, then such equivalents are herein incorporated as if individually set forth.

Any discussion of the prior art throughout the specification should in no way be considered as an admission that such prior art is widely known or forms part of common general knowledge in the field.

## Claims

1. A method for communicating between a near field device and a near field reader, the method comprising the steps of:
Detecting the presence of the near field device by a proximity detector; and
Activating the field of the near field card reader;
Wherein the detection of the near field device allows the time period of activation of the near field card reader to be reduced.

2. A method as claimed in claim 1 comprising the step of deactivating the field of the near field reader when the communication is complete, or if the near field device is removed from the field.

3. A method as claimed in either one of claims 1 or 2comprising the step of determining the distance between the near field reader and the near field device.

4. A method as claimed in any one of claims 1 to 3 comprising the step of activating the proximity detector when an activation signal is received.

5. A method as claimed in claim 4 wherein the activation signal is transmitted by a control means which is associated with an IFE system wherein the activation signal is transmitted when a user has selected a transaction.

6. A method as claimed in any one of claims 1 to 5 having a plurality of near field readers, the method comprising adjusting the field of the plurality of near field readers dependent on the distance between the near field readers and the near field device.

7. A method as claimed in claim 6 comprising the step of selecting one of the plurality of near field readers to communicate with the near field device depending on the relative distances of the near field readers to the near field device.

8. A near field reader comprising:
A communication means for communications between the reader and a near field device; and
A proximity detector for detecting a near field device when in proximity to the reader,
Wherein when the proximity detector detects a near field device the communication means is activated.

9. A near field reader as claimed in claim 8 wherein the proximity detector detects the distance of the near field device from the reader and wherein the power level of the communications means is adjusted dependent on the distance of the near field device.

10. A near field reader as claimed in either one of claims 8 or 9 wherein the communication means is not activated until the distance is within a maximum distance from the reader.

11. A near field reader as claimed in any one of claims 8 to 10 wherein the proximity detector comprises any one or more of:
An optical detector such as a visible light, or infrared;
An ultrasound detector;
A radio frequency detector;
A magnetic coupling detector; or
A measurement device for capacitance or dielectric field.

12. A near field reader as claimed in any one of claims 8 to 11 wherein the sensing range of the proximity detector is adjustable.

13. A near field reader as claimed in any one of claims 8 to 12 wherein the proximity detector detects the removal of the near field device from the reader or a time period and deactivates the communication means.

14. A near field reader as claimed in any one of claims 8 to 13 wherein the near field reader is connected or connectable to an airframe or aircraft seat.

15. A system for near field device reading on an aeroplane, the system comprising a plurality of near field readers as described in any one or more of claims 8 to 14 wherein the near field readers are arranged in one or more groups, the system comprising a control means associated with at least one of the one or more groups, and wherein in use the control means controls or limits the operation of the remaining near field readers when at least one near field reader is in use.
